# EUROPÄISCHE PATENTSCHRIFT

(11) **EP 1 858 804 B1**
(45) Veröffentlichungstag und Bekanntmachung des Hinweises auf die Patenterteilung: **06.01.2010**
(21) Anmeldenummer: 06723511.9
(22) Anmeldetag: 17.03.2006
(51) Int. Cl.: C01B 25/08

(54) **KREISPROZESS ZUR NASSCHEMISCHEN HERSTELLUNG VON LITHIUMMETALLPHOSPHATEN**
CYCLIC PROCESS FOR WET-CHEMICALLY PRODUCING LITHIUM METAL PHOSPHATES
CYCLE DE PRODUCTION PAR VOIE HUMIDE DE PHOSPHATES METALLIQUES DE LITHIUM

(30) Priorität: 18.03.2005 DE 102005012640
(43) Veröffentlichungstag der Anmeldung: 28.11.2007
(73) Patentinhaber: SÜD-CHEMIE AG, 80333 München (DE)
(72) Erfinder: NUSPL, Gerhard, 85659 Forstern (DE); VOGLER, Christian, 85368 Moosburg (DE); ZUBER, Josefine, 84036 Kumhausen (DE)
(74) Vertreter: Stolmár, Matthias
(86) Internationale Anmeldenummer: PCT/EP2006/002472
(87) Internationale Veröffentlichungsnummer: WO 2006/097324

(56) Entgegenhaltungen:
- WO-A2-02/083555
- WO-A2-2005/076390
- DE-A1- 10 353 266
- DELACOURT ET AL: "Crystal chemistry of the olivine-type LixFePO4 system (0=<x=<1) between 25 and 370 ?<o>C" SOLID STATE SCIENCES, ELSEVIER, PARIS, FR, Bd. 7, Nr. 12, Dezember 2005 (2005-12), Seiten 1506-1516, XP005192270 ISSN: 1293-2558
- DELACOURT ET AL: "Electrochemical and electrical properties of Nb- and/or C-containing LiFePO4 composites" SOLID STATE IONICS, NORTH HOLLAND PUB. COMPANY. AMSTERDAM, NL, Bd. 177, Nr. 3-4, 31. Januar 2006 (2006-01-31), Seiten 333-341, XP005272065 ISSN: 0167-2738
- MELIGRANA ET AL: "Hydrothermal synthesis of high surface LiFePO4 powders as cathode for Li-ion cells" JOURNAL OF POWER SOURCES, ELSEVIER, AMSTERDAM, NL, Bd. 160, Nr. 1, 29. September 2006 (2006-09-29), Seiten 516-522, XP005649261 ISSN: 0378-7753
- ARNOLD G ET AL: "Fine-particle lithium iron phosphate LiFePO4 synthesized by a new low-cost aqueous precipitation technique" JOURNAL OF POWER SOURCES, ELSEVIER, AMSTERDAM, NL, Bd. 119-121, 1. Juni 2003 (2003-06-01), Seiten 247-251, XP004430175 ISSN: 0378-7753
- TAJIMI S ET AL: "Enhanced electrochemical performance of LiFePO4 prepared by hydrothermal reaction" SOLID STATE IONICS, NORTH HOLLAND PUB. COMPANY. AMSTERDAM, NL, Bd. 175, Nr. 1-4, 30. November 2004 (2004-11-30), Seiten 287-290, XP004667584 ISSN: 0167-2738
- YANG S ET AL: "Hydrothermal synthesis of lithium iron phosphate cathodes" ELECTROCHEMISTRY COMMUNICATION, ELSEVIER, AMSTERDAM, NL, Bd. 3, 2001, Seiten 505-508, XP002266496 ISSN: 1388-2481
- MORGAN D ET AL: "Li Conductivity in LixMPO4 ( M = Mn,Fe,Co,Ni) Olivine Materials" ELECTROCHEMICAL AND SOLID-STATE LETTERS, IEEE SERVICE CENTER, PISCATAWAY, NJ, US, Bd. 7, Nr. 2, 2004, Seiten A30-A32, XP009056734 ISSN: 1099-0062

## Beschreibung

Die Erfindung betrifft ein Verfahren zur Herstellung von Lithiummetallphosphaten der Formel LiMPO₄, in welcher M mindestens ein zweiwertiges Metall, insbesondere der ersten Übergangsmetallreihe, bedeutet.

Synthetisches Lithiumeisenphosphat (LiFePO₄) wird als Kathodenmaterial in Lithiumionenbatterien verwendet. So wird in der US 5,910,382 ein Kathodenmaterial für eine wiederaufladbare Batterie beschrieben, wobei die Kathode eine Verbindung der Formel LiMPO₄ enthält, in welcher M für zumindest ein Kation aus der ersten Reihe der Übergangsmetalle steht.

In der WO02/099913 wird ein Verfahren zur Herstellung von LiMPO₄ beschrieben, wobei aus einer äquimolaren wässrigen Lösung von Li⁺, Fe³⁺ und PO₄³⁻ das Wasser verdampft und dadurch eine Feststoffmischung hergestellt wird. Die Feststoffmischung wird anschließend bei einer Temperatur von weniger als 500°C zersetzt, um einen reinen Li- und Fe-Phosphatprecursor zu erzeugen. Durch Umsetzung des Precursors bei einer Temperatur von weniger als 800° C in reduzierender Atmosphäre wird LiFePO₄ erhalten.

In der EP 1 195 838 A2 wird der Aufbau einer nicht wässerigen Elektrolysezelle beschrieben, bei der als Kathodenmaterial unter anderen Litiumübergangsmetallphosphate LiMPO₄, speziell LiFePO₄, verwendet wird. Dieses wird in einem Festkörperverfahren synthetisiert. Dabei werden trockenes und festes Lithiumphosphat und Eisen(II)phosphat-Oktahydrat gemischt, vermahlen und durch Wärmebehandlung und Sintern über mehrere Stunden bei ca. 600 °C zur Reaktion gebracht. Die dabei verwendeten Mahltechniken bedingen dabei neben dem aufwendigen und kostenintensiven Verfahren auch die Gefahr der Kontermination des Produkts LiFePO₄ durch Rückstände und Abrieb der Mühle.

In der WO02/08355 werden binäre, ternäre und quaternäre Lithiummetallphosphate der allgemeinen Formel Li(FeₓM1_{y}M2_{z})PO₄ beschrieben, wobei M1 mindestens ein Element aus der Gruppe von Sc, Ti, V, Cr, Mn, Co, Ni, Cu, Zn, Be, Mg, Ca, Sr, Ba, Al, Zr und La ist, M2 mindestens ein Element aus der Gruppe Sc, Ti, V, Cr, Mn, Co, Ni, Cu, Zn, Be, Mg, Ca, Sr, Ba, Al, Zr und La ist, und weiter gilt 0,5 ≤ x < 1, 0 < y< 0,5 sowie 0 < z < 0,5, mit der Maßgabe, dass x + y + z = 1 oder x = 0, y = 1, z = 0. Das Lithiummetallphosphat ist erhältlich durch ein Verfahren, bei dem Vorläuferverbindungen der Elemente Li, Fe, M1 und/oder M2 aus wässrigen Lösungen ausgefällt werden und dann das Fällungsprodukt unter einer Inertgasatmosphäre oder einer reduzierenden Atmosphäre zunächst bei einer Temperatur im Bereich von Raumtemperatur bis etwa 200° C getrocknet und anschließend bei einer Temperatur im Bereich von 300° C bis 1000° C calciniert wird.

In dem Journal of Power Sources 119-121 (2003)247-251 wird ein nasschemisches Verfahren zur Herstellung von LiFePO₄ beschrieben. Dabei werden die Ausgangsprodukte Fe₃ (PO₄)₂ und Li₃PO₄ als wässerige Lösungen gemischt und in Abhängigkeit vom pH - Wert gemeinsam gefällt. Das gefilterte Vorprodukt wird anschließend bei 650 °C bis 800 °C über 12 Stunden unter Inertgas zum Lithiumeisenphosphat LiFePO₄ umgesetzt. Das Verfahren bedingt dabei relativ hohe Litiumrestkonzentrationen im Filtrat.

In der JP 2002-151082 A wird ein Verfahren zur Herstellung von Lithiumeisenphosphat beschrieben, wobei eine Lithiumverbindung, eine zweiwertige Eisenverbindung und eine Phosphorsäureverbindung so vermischt werden, dass das Molverhältnis der zweiwertigen Eisenionen und der Phophorsäureionen etwa 1:1 beträgt. Das Gemisch wird in einem Temperaturbereich von mindestens 100° C bis höchstens 200°C in einem dicht verschlossenen Gefäß unter Beifügen eines polaren Lösungsmittels und eines inaktiven Gases zur Reaktion gebracht. Das so erhaltene Lithiumeisenphosphat kann anschließend physikalisch zerkleinert werden.

Bei den aus dem Stand der Technik bekannten Verfahren zur Herstellung von Lithiumeisenphosphat müssen für die Ausgangschemikalien, wie z.B. Eisenoxalat, relativ hohe Materialkosten in Kauf genommen werden. Auch ist der Schutzgasverbrauch während des Sinterprozesses erheblich und es können bei der Sinterung toxische Nebenprodukte, wie CO, entstehen. Es wurde auch gefunden, dass häufig die Partikelgrößenverteilung des Produkts sehr breit und bimodal ist und das Lithiumeisenphosphat eine relativ hohe Partikelgröße sowie eine breite Partikelgrößenverteilung aufweist.

In der DE 103 53 266 wird ein Verfahren zur Herstellung einer Verbindung der Formel LiMPO₄ beschrieben, wobei M mindestens ein Metall der ersten Übergangsreihe ist. In einem ersten Schritt wird eine Precursormischung hergestellt, welche mindestens eine Li⁺-Quelle, mindestens eine M²⁺ - Quelle und mindestens eine PO₄³⁻-Quelle enthält, um einen Niederschlag zu fällen und somit eine Precursorsuspension herzustellen. Die Precursormischung bzw. die Precursorsuspension wird einer Dispergier- oder Mahlbehandlung unterworfen. Diese Behandlung wird solange durchgeführt, bis der D₉₀-Wert der Partikel in der Precursorsuspension weniger als 50 µm beträgt. Aus der so erhaltenen Precursorsuspension wird das LiMPO₄ hergestellt, vorzugsweise durch Umsetzung unter hydrothermalen Bedingungen. Das erhaltene Material weist eine besonders vorteilhafte enge Partikelgrößenverteilung und sehr gute elektrochemische Eigenschaften bei der Verwendung in Elektroden auf.

Bei einer Verwendung von Lithiummetallphosphaten der Formel LiM-PO₄ als Elektrodenmaterial in Lithiumsekundärbatterien werden hohe Anforderungen an die chemische Reinheit gestellt, um eine hohe Leistungsfähigkeit der Sekundärbatterie zu erreichen. Beispielsweise dürfen neben Lithium keine weiteren Alkalimetallionen in dem Material enthalten sein. Bei einem Verfahren, wie es in der DE 103 53 266 beschrieben ist, kann daher als Fällungsmittel nur eine reine Lithiumverbindung, insbesondere Lithiumhydroxid verwendet werden. Verfahrensbedingt wird jedoch nur ein Drittel der eingesetzten Lithiumionen für die Herstellung des gewünschten Endprodukts genutzt, während die restlichen zwei Drittel der eingesetzten Lithiumionen nur als Fällungsmittel dienen und ins Abwasser gelangen. Dieser Umstand bringt Probleme in der Abwasserentsorgung und wirtschaftliche Nachteile mit sich, weil Lithium die kostspieligste Rohstoffkomponente bei der Herstellung von Lithiumeisenphosphat ist.

Um die im Abwasser enthaltenen Lithiumionen erneut nutzen zu können, wurde versucht, diese als Carbonat auszufällen. Lithiumcarbonat fällt dann als Koppelprodukt während der Herstellung des Lithiummetallphosphats an und kann für weitere Zwecke verwendet werden. In der US 3,857,920 wird ein Verfahren zur Abtrennung von Lithiumionen aus Abwässern beschrieben, wobei Lithium in Form eines Carbonats ausgefällt wird. Lithiumcarbonat kann jedoch nur nach einer Überführung in ein sehr gut wasserlösliches Salz erneut für die Synthese von Lithiummetallphosphaten eingesetzt werden. Dies erfordert weitere Produktionsschritte, was unter Kostengesichtspunkten ungünstig ist. Außerdem besitzt Lithiumcarbonat eine vergleichsweise hohe Restlöslichkeit, so dass ein großer Teil der Lithiumionen im Abwasser verloren geht. Lithiumverbindungen mit geringerer Restlöslichkeit würden zwar die Ausbeute an aus dem Abwasser rückgewonnenem Lithium erhöhen, ihre weitere Verwendbarkeit ist jedoch noch weiter eingeschränkt.

In der Zeitschrift Solid State Ionics 175 (2004) 287-290, wird ein Verfahren zur Herstellung von Lithiummetallphosphaten der Formel LiMPO₄ offenbart, in welcher M mindestens ein zweiwertiges Metall bedeutet, umfassend die folgenden Schritte:
- Vorbereitung einer Lösung aus Lithiumhydroxid LiOH.H₂O, Eisensulfat FeSO₄.7H₂O und Orthophosphorsäure im Verhältnis Li:Fe:P = 3:1:1
- Autoklavierung der Lösung in einem Stahl-Autoklav bei 150 - 220 °C während mehrerer Stunden
- Abfiltrieren des erzeugten Produktes und Trocknen bei 400 °C unter Stickstoff-Atmosphäre für die Dauer einer Stunde

Der Erfindung lag als Aufgabe zugrunde, ein Verfahren zur Herstellung von Lithiummetallphosphaten der Formel LiMPO₄ bereitzustellen, in welcher M mindestens ein zweiwertiges Metall, insbesondere der ersten Übergangsmetallreihe bedeutet, wobei das Verfahren so ausgestaltet ist, dass das eingesetzte lithiumhaltige Material möglichst vollständig zum gewünschten Endprodukt umgesetzt wird und im Idealfall kein Lithium über das Abwasser verloren geht.

Diese Aufgabe wird mit einem Verfahren gemäß Anspruch 1 gelöst. Vorteilhafte Weiterbildungen des erfindungsgemäßen Verfahrens sind Gegenstand der abhängigen Patentansprüche.

Erfindungsgemäß wird ein Verfahren zur Herstellung von Lithiummetallphosphaten der Formel LiMPO₄ zur Verfügung gestellt, in welchem M mindestens ein zweiwertiges Metall, vorzugsweise der ersten Übergangsmetallreihe, bedeutet. Das erfindungsgemäße Verfahren umfasst die folgenden Schritte:
a) Umsetzen eines Lithiumphosphats, mit einem Metallsalz MXₙ und einer säuren Phosphatquelle, vorzugsweise Phosphorsäure, in einem polaren Lösungsmittel, wobei X ein Anion ist, welches mit dem Metall M ein in dem Lösungsmittel lösliches Salz bildet, und n der Quotient der Wertigkeit des Metalls M und der Wertigkeit des Anions X entspricht, wobei eine Suspension von mindestens einem M-haltigen Phosphat in dem Lösungsmittel erhalten wird;
b) Zugabe einer basischen Lithiumquelle, wie z.B. Lithiumhydroxid oder Lithiumoxid, zu der in Schritt (a) erhaltenen Suspension des Metallphosphats in dem Lösungsmittel, wobei ein Fällungsprodukt erhalten wird;
c) Umsetzen des in (b) erhaltenen Fällungsprodukts zu einem Lithiummetallphosphat der Formel LiMPO₄, wobei eine Restlösung erhalten wird, die Lithiumionen enthält;
d) Zugabe einer basischen Phosphatquelle, vorzugsweise ein Alkaliphosphat, zur Restlösung, so dass Lithiumphosphat, vorzugsweise Lithiumorthophosphat, aus der Restlösung ausgefällt wird;
e) Abtrennen des Lithiumphosphats.

Lithiumphosphat, insbesondere Lithiumorthophosphat, ist eine in Wasser und anderen polaren Lösungsmitteln ausgesprochen schlecht lösliche Lithiumverbindung. Es kann jedoch durch Zugabe von Phosphorsäure als Lithiumdihydrogenphosphat wieder in Lösung gebracht werden. Wird dieser Lösevorgang in die Synthese des Lithiummetallphosphats integriert, kann allerdings nur rund die Hälfte des bei der Rückgewinnung anfallenden Lithiumphosphats wieder in die Synthese zurückgeführt werden, während die zweite Hälfte des Lithiumphosphats als Koppelprodukt anfällt und einer weiteren Verwendung zugeführt werden muss. Die Nachfrage nach Lithiumphosphat ist jedoch nur sehr gering. Lithiumorthophosphat findet beispielsweise Anwendung als basischer Katalysator für bestimmte organische Synthesen. Um das gesamte bei der Synthese des Lithiummetallphosphats anfallende Lithiumphosphat in den Syntheseprozess rückführen zu können, müsste das Lithiumphosphat mit einer reduzierten Phosphorsäuremenge als Dilithiumhydrogenphosphat gelöst werden. Hierfür sind jedoch noch keine effizienten Verfahren entwickelt worden.

Es wurde nun überraschend gefunden, dass es in Gegenwart von Metallsalzen und Phosphorsäure möglich ist, festes Lithiumphosphat, insbesondere Lithiumorthophosphat, vollständig zu lösen und gleichzeitig als M-haltiges Phosphat wieder auszufällen. Es findet also ein Umkristallisieren statt, das durch die niedrige Löslichkeit des M-haltigen Phosphats begünstigt wird. Wird dieser Schritt einer Umfällung des Lithiumphosphats zu einem Lithiummetallphosphat in die Herstellung des Lithiummetallphosphats integriert, ist es möglich, das gesamte Lithium, welches für die Herstellung des Lithiummetallphosphats als Fällungsmittel benötigt wird, in den Herstellungsprozess zurückzuführen, indem das Lithium in einem abschließenden Schritt als Lithiumphosphat, insbesondere als Lithiumorthophosphat gefällt wird.

In einem ersten Schritt (a) wird Lithiumphosphat, insbesondere Lithiumorthophosphat, mit mindestens einem Metallsalz MXₙ und einer sauren Phosphatquelle, insbesondere Phosphorsäure, in einem polaren Lösungsmittel aufgelöst. Es entsteht mindestens ein Phosphatsalz des eingesetzten Metallions sowie Lithiumdihydrogenphosphat, welches in dem Lösungsmittel löslich ist. Weiter ist der Lösung ein Lithiumsalz LiₘX mit m als Wertigkeit des Anions X enthalten, welches aus dem Anion des eingesetzten Metallsalzes gebildet wird.

Als saure Phosphatquelle können solche Verbindungen eingesetzt werden, die in Wasser einen pH von weniger als 7 ergeben und die entweder ein Phosphatanion umfassen oder zu einem Phosphatanion umgesetzt werden können.

Als polares Lösungsmittel können solche Lösungsmittel verwendet werden, die mit Wasser mischbar sind und vorzugsweise eine höhere Polarität als Aceton aufweisen.

Lithiumphosphat, Metallsalz MXₙ sowie saure Phosphatquelle werden bevorzugt in solchen Mengen eingesetzt, dass sie näherungsweise den stöchiometrischen Verhältnissen der folgenden Reaktionsgleichung entsprechen, wobei beispielhaft Phosphorsäure als saure Phosphatquelle eingesetzt ist:

8 Li₃PO₄ (s) + 12 MXₙ (aq) + 4 H₃PO₄ (aq) → 3 M₃(PO₄)₂·XH₂O (s) + 6 LiH₂PO4 (aq) + 3 MXₙ (aq) + 18/m LiₘX

Im anschließenden Schritt (b) wird eine basische Lithiumquelle, wie z.B. Lithiumhydroxid oder Lithiumoxid in gelöster oder fester Form zugegeben, um den pH-Wert anzuheben und das restliche noch in der Lösung verbliebene Metallsalz MXₙ als M-haltiges Phosphat auszufällen. Dabei verbleibt LiₘX in Lösung, während Lithiumphosphatverbindungen je nach stöchiometrischen Verhältnissen und Reaktionsbedingungen ganz oder teilweise ausfallen und mit dem M-haltigen Phosphat ein Fällungsprodukt bilden. Die zugegebene Menge an basischer Lithiumquelle, vorzugsweise Lithiumhydroxid, entspricht dabei im Idealfall der Menge an Lithium, welche später im herzustellenden Lithiummetallphosphat enthalten ist.

Unter einer basischen Lithiumverbindung werden solche Verbindungen verstanden, welche in Wasser einen pH-Wert von mehr als 7 bewirken.

Bevorzugt wird die basische Lithiumquelle, vorzugsweise das Lithiumhydroxid, in einer Menge zugegeben, so dass die folgende Reaktionsgleichung erfüllt wird:

3 M₃(PO₄)₂·xH₂O (s) + 6 LiH₂PO₄ (aq) + 3 MXₙ (aq) + + 18/m LiₘX (aq) + 12 LiOH → → 4 M₃(PO₄)₂·xH₂O (s) + 4 Li₃PO₄ (s, aq) + 24/m LiₘX (aq)

Gegebenenfalls können jedoch auch Abweichungen von den oben genannten stöchiometrischen Verhältnissen gewollt sein, um z.B. eine spezielle Zusammensetzung des Fällungsproduktes selbst zu erzielen, vorzugsweise eine Zusammensetzung; die den Stoffmengenverhältnissen des als Endprodukt erwünschten Lithiummetallphosphates entspricht.

Das in Schritt (b) erhaltene Fällungsprodukt, welches im Wesentlichen das M-haltige Phosphat sowie gegebenenfalls Lithiumphosphat enthält, wird in einem weiteren Reaktionsschritt zum gewünschten Lithiummetallphosphat LiMPO₄ umgesetzt.

Vorzugsweise wird dazu die in Schritt (b) erhaltene Suspension in Schritt (c) unter hydrothermalen Bedingungen direkt zum gewünschten Lithiummetallphosphat der Formel LiMPO₄ umgesetzt.

Die Hydrothermalsynthese erfolgt dabei nach der folgenden idealisierten Summengleichung:

4 M₃(PO₄)₂·xH₂O (s) + 4 Li₃PO₄ (s, aq) + 24/m LiₘX (aq) → → 12 LiMPO₄ (s) + 24/m LiₘX

Das Lithiummetallphosphat der Formel LiMPO₄ wird dann aus der Suspension abgetrennt und in der üblichen Weise weiter verarbeitet, indem es beispielsweise gewaschen und getrocknet wird. Die Abtrennung des Lithiummetallphosphats kann nach üblichen Verfahren erfolgen, beispielsweise durch Filtration (z.B. in einem Druckfiltrator), Abzentrifugieren, Sedimentieren, oder Dekantieren der überstehenden Lösung.

Die in Schritt (b) anfallende Suspension des Fällungsproduktes muss in Schritt (c) nicht unbedingt direkt zum Lithiummetallphosphat umgesetzt werden. Es ist zum Beispiel auch möglich, das Fällungsprodukt aus der Suspension abzutrennen, gegebenenfalls zu waschen und zu trocknen und erst dann durch eine Wärmebehandlung unter inerten oder reduzierenden Bedingungen zum Lithiummetallphosphat umzusetzen. Zur Wärmebehandlung kann das Fällungsprodukt calciniert werden, wobei die Calcination bei Temperaturen von mehr als 400°C, vorzugsweise mehr als 600 °C erfolgen kann. Die Abtrennung des Fällungsproduktes aus der in Schritt (b) erhaltenen Suspension kann beispielsweise ebenfalls durch Filtration, Abzentrifugieren oder Dekantieren erfolgen.

Die direkte hydrothermale Umsetzung ist jedoch bevorzugt, da sie weniger Zwischenschritte umfasst.

Beim Abtrennen des in Schritt (b) erhaltenen Fällungsproduktes bzw. bei der Abtrennung des durch hydrothermale Umsetzung erhaltenen Lithiummetallphosphates fällt in Schritt (c) eine Restlösung an, welche Lithiumionen enthält.

Zu dieser Restlösung wird nun in Schritt (d) eine basische Phosphatquelle, vorzugsweise ein Alkaliphosphat A₃PO₄ zugegeben, so dass das im Filtrat gelöste Lithium in Form von Lithiumphosphat, vorzugsweise als Lithiumorthophosphat, ausgefällt wird. Im Alkaliphosphat A₃PO₄ steht A für ein Alkalimetall, bevorzugt Kalium oder Natrium, insbesonders bevorzugt für Natrium. Als basische Phosphatquelle kann eine Verbindung verwendet werden, die Phosphationen bereitstellt und in Wasser einen pH-Wert von mehr als 7 bewirkt.

Die Ausfällung des Lithiumphosphats erfolgt nach der folgenden idealisierten Gleichung:

24/m LiₘX + 8 A₃PO₄ (aq) → 8 Li₃PO₄ (s) + 24/m AₘX (aq)

Abschließend wird in Schritt (e) das Lithiumphosphat aus der Suspension abgetrennt und gegebenenfalls gewaschen und getrocknet. Das dabei anfallende Filtrat wird weiter aufgearbeitet oder einer geordneten Beseitigung zugeführt.

Beim erfindungsgemäßen Verfahren werden also im Idealfall lediglich die äquivalenten Mengen an Metall und Lithium sowie Phosphationen zugeführt, welche für die Herstellung des Lithiummetallphosphats erforderlich sind. Im Abwasser, welches nach der Abtrennung des Lithiumphosphats im letzten Schritt anfällt, sind bei idealer Reaktionsführung keine Lithiumionen und keine Ionen des Metalls M mehr enthalten. Um eine Belastung des Abwassers mit den genannten Ionen möglichst gering zu halten, wird daher bevorzugt möglichst nahe an den Verhältnissen gearbeitet, welche sich aus den oben angegebenen Reaktionsgleichungen ergeben. Gegebenenfalls kann aber auch ein gezieltes Abweichen von den genannten stöchiometrischen Verhältnissen vorteilhaft sein, z. B. um die Morphologie des Fällungsproduktes zu steuern, oder die Ausbeute an rückgewonnenem Lithium zu erhöhen, beispielsweise durch einen Überschuss an Phosphationen oder Alkalisierungsmittel.

Wie bereits erwähnt, wird das Lithiumphosphat, welches im Schritt (e) gewonnen wird, vorzugsweise in den Schritt (a) zurückgeführt. Zu Beginn der Produktion muss daher nur einmalig eine entsprechende Menge an Lithiumphosphat eingesetzt werden, die.dann im Idealfall vollständig im Kreis geführt wird.

Das erfindungsgemäße Verfahren eignet sich an sich zur Herstellung von Verbindungen der allgemeinen Summenformel LiMPO₄, worin M ein oder mehrere zweiwertige Metallionen umfasst. Bevorzugt handelt es sich um ein oder mehrere zweiwertige Übergangsmetalle, insbesondere Fe, Mn, Ni, Co. Ganz besonders bevorzugt umfasst M zumindest Fe. Die Metallionen M können bis zu einem Anteil von maximal 10 mol% auch durch nicht zweiwertige Metallionen ersetzt sein, was in strukturchemisch geläufiger Weise zu strukturellen Fehlordnungen und nichtstöchiometrischen Verbindungen führen kann. Auch Li und Phosphat können auf den jeweiligen Strukturplätzen in geringfügigem Umfang durch andere Ionen ersetzt sein. Solche Abweichungen von der idealen Formel LiMPO₄ sind in der Regel nicht erwünscht, können aber unter Umständen herstellungstechnisch nicht verhindert werden. Im Einzelfall können sie aber auch erwünscht und gezielt herbeigeführt sein, wenn sie die Materialeigenschaften vorteilhaft beeinflussen.

Die meisten zweiwertigen Metallionen und die bevorzugten zweiwertigen Übergangsmetallionen bilden leicht wasserlösliche Salze, z.B. als Sulfate, Chloride oder Nitrate und schwerlösliche Phosphate. Daher kann das erfindungsgemäße Verfahren zur Herstellung von Lithiummetallphosphaten leicht vom Fachmann an die verschiedenen genannten Metallionen angepasst werden. Lithiummetallphosphate mit mehreren verschiedenen Metallionen M können in einfacher Weise durch das Ansetzen von Mischlösungen der verschiedenen Verbindungen MXₙ in Schritt a) dargestellt werden. Besonders bevorzugt wird mit dem Verfahren LiFePO₄ hergestellt.

Das Anion X des Metallsalzes MXₙ wird so ausgewählt, dass das Metallsalz MXₙ im polaren Lösungsmittel, in welchem die Reaktion durchgeführt wird, gelöst werden kann und das Anion X andererseits mit Lithium eine lösliche Verbindung bildet. Bevorzugt wird X ausgewählt aus der Gruppe von Chlorid, Nitrat und Sulfat, wobei.das Sulfatanion besonders bevorzugt ist.

In einer bevorzugten Ausführungsform wird eine saure Phosphatquelle, wie z.B. Phosphorsäure, verwendet und bereits vor Beginn von Schritt a) der Lösung der Metallsalze MXₙ zugegeben, um sie auf einen pH-Wert vorzugsweise kleiner 2, besonders bevorzugt kleiner 1 zu stellen. Unter diesen Bedingungen sind die zweiwertigen Ionen der Metalle M gegenüber Oxidation stabil, so dass das Metallphosphat in reiner Form erhalten wird. Erst in Schritt (a) steigt der pH-Wert durch Umsetzen mit Lithiumphosphat auf einen Wert zwischen 2 und 6. Schritt (a) und die folgenden Schritte werden daher vorzugsweise unter Sauerstoffabschluß durchgeführt, um Oxidation zu vermeiden.

Im Schritt (b) wird der pH-Wert der Suspension durch die Zugabe einer basischen Lithiumkomponente wie z.B. Lithiumhydroxid vorzugsweise auf einen pH-Wert zwischen 6 und 8 weiter erhöht. Um eine Oxidation des Metalls M zu vermeiden, wird in einer besonders bevorzugten Ausführungsform in Schritt (a) der Suspension ein Reduktionsmittel zugegeben. Ein geeignetes Reduktionsmittel ist beispielsweise Lithiumsulfid, Schweflige Säure, Sulfite, Dithionite, Phosphite, Hypophosphite, Zitronensäure oder Citrate u. dgl.

In Schritt (d) des erfindungsgemäßen Verfahrens werden gelöste Lithiumionen in Form von Lithiumphosphat aus der nach der Abtrennung des Fällungsproduktes bzw. des Lithiummetallphosphats anfallenden Restlösung ausgefällt. Dazu wird eine geeignete basische Phosphatquelle zugegeben. Vorteilhaft wird als Phosphatquelle ein Alkaliphosphat, insbesondere Natriumphosphat, zugegeben. Es ist aber beispielsweise auch möglich, Phosphorsäure und ein Alkalisierungsmittel wie Natronlauge oder Natriumcarbonat in Kombination zu verwenden. Es folgt dann ein Austausch der Anionen, wobei vorzugsweise schwer lösliches Lithiumorthophosphat sowie das Alkalisalz des Anions X erhalten wird, welches in Wasser gelöst bleibt. In einer besonders bevorzugten Ausführungsform werden die Fällungsbedingungen wie etwa Konzentration, Temperatur, Fällungsgeschwindigkeit, mechanischer Energieeintrag, u.s.w. so eingestellt, dass die gefällten Lithiumphosphatpartikel bzw. -agglomerate eine für den Filtrations- und Waschvorgang besonders vorteilhafte Morphologie annehmen, insbesondere eine sphärische Partikel- bzw. Agglomeratform. Dazu kann die Lithiumionen enthaltende Restlösung auch gegebenenfalls eingeengt, beispielsweise durch Eindampfen oder Umkehrosmose, oder durch Wasser oder ein anderes Lösungsmittel verdünnt werden, um die Salzkonzentration in einen für die Fällung optimalen Bereich zu bringen. Das Abtrennen des gefällten Lithiumphosphats von der Restlösung kann z.B. durch Filtration (beispielsweise in einem Druckfiltrator, in einer Nutsche oder in einer Kammerfilterpresse), durch Zentrifugation, Sedimentation bzw. Abdekantieren erfolgen. Das nach Abtrennung von Lithiumphosphat anfallende alkalische Abwasser enthält im Falle einer Verwendung von Natriumphosphat als Phosphatquelle in Schritt (d) sowie von Sulfationen als Anionen X des Metallsalzes MXₙ lediglich Natriumsulfat, welches nach Neutralisierung ohne größere Schwierigkeiten entsorgt werden kann. Es kann auch vorteilhaft zur Neutralisation anderer saurer Abwässer eingesetzt und so nutzbringend entsorgt werden.

Die Reaktion in den Schritten (a) sowie (b) wird vorzugsweise bei Temperaturen im Bereich zwischen etwa 5° und 80° C, bevorzugt zwischen 15° und 60° C, insbesondere bevorzugt zwischen Raumtemperatur und 50° C und bevorzugt bei Atmosphärendruck durchgeführt. Es können jedoch auch andere Reaktionsbedingungen angewandt werden, sofern sie die Umfällung nicht negativ beeinflussen.

Gemäß einer bevorzugten Ausführungsform des erfindungsgemäßen Verfahrens erfolgt in den Schritten (a), (b) und/oder (c) eine Dispergier- oder Mahlbehandlung der Suspension bis der D₉₀-Wert der in der Suspension enthaltenen Partikel weniger als 50 µm beträgt. Durch die intensive Dispergier- oder Mahlbehandlung kann eine sehr enge Partikelgrößenverteilung sowie eine sehr geringe Partikelgröße des Endprodukts, LiMPO₄, erreicht werden. Durch die Dispergier- oder Mahlbehandlung, insbesondere in den Schritten (a) und/oder (b), wird einerseits eine intensive Mischung und andererseits eine Deagglomeration bzw. Zerkleinerung der Partikelaggregate in der Suspension erreicht. Dies wird durch Rühren mit niedriger Geschwindigkeit nicht bewirkt.

Die Dispergier- oder Mahlbehandlung kann in jeder dem Fachmann als geeignet erscheinenden Vorrichtung erfolgen, mit welcher ausreichende Scherkräfte oder Turbulenz erzeugt werden können, die zu einer intensiven Mischung und gleichzeitig zu einer Deagglomeration bzw. Zerkleinerung der Partikelaggregate in der Suspension führen, so dass ein D₉₀-Wert von weniger als 50 µm erzielt wird. Bevorzugte Vorrichtungen umfassen Dispergatoren (mit oder ohne Pumprotoren), Ultraturrax^{®} -Rührer, Mühlen, wie Kolloidmühlen oder Manton-Gaulin-Mühlen, Intensivmischer, Kreiselpumpen, In-Line-Mischer, Mischdüsen, wie Injektordüsen, oder Ultraschallgeräte. Diese Vorrichtungen sind dem Fachmann als solche bekannt. Die erforderlichen Einstellungen, um den gewünschten Effekt auf die mittlere Partikelgröße in den Suspensionen zu erhalten, können je nach Vorrichtungstyp anhand routinemäßiger Versuche bestimmt werden.

Die Dispergier- oder Mahlbehandlung wird bevorzugt in der Weise durchgeführt, dass ein Leistungseintrag in die Suspension von mindestens 5 kW/m³, insbesondere mindestens 7 kW/m³ erreicht wird. Dieser Leistungseintrag kann auf bekannte Weise je nach Vorrichtung bestimmt werden, z.B. bei Verwendung eines Ultraturrax^{®} -Rührers anhand der Formel P = 2 · π · n · M, wobei M das Drehmoment und n die Drehzahl darstellt.

Vorzugsweise erfolgt in den Schritten (a), (b) und/oder (c) die Dispergier- oder Mahlbehandlung der Suspension so lange, bis der D₉₀-Wert der in der Suspension enthaltenen Partikel weniger als 25 µm, vorzugsweise weniger als 20 µm, insbesondere bevorzugt weniger als 15 µm beträgt.

Die Dispergier- oder Mahlbehandlung erfolgt in den Schritten (a) bzw. (b) bevorzugt in der Weise, dass die Dispergier- oder Mahlbehandlung bereits begonnen wird, ehe die Umfällung bzw. Ausfällung der Partikel beginnt und bis zum Ende der Fällung fortgesetzt wird. Im Schritt (a) beginnt die Dispergier- oder Mahlbehandlung daher bevorzugt bereits vor der Zugabe des Metallsälzes MXₙ und dauert bis zur weitgehend vollständigen Umsetzung zum M-haltigen Phosphat und dem entsprechenden Lithiumsalz an. Entsprechend beginnt in Schritt (b) die Dispergier- oder Mahlbehandlung bevorzugt bereits vor der Zugabe der basischen Lithiumquelle, vorzugsweise des Lithiumhydroxids, und wird bis zur vollständigen Umsetzung zum M-haltigen Phosphat fortgesetzt. Auf diese Weise wird die Ausbildung von großen Kristallblättchen bzw. Kristallagglomeraten verhindert bzw. werden diese zerkleinert. Vor der weiteren Umsetzung zum Lithiummetallphosphat liegt dann eine homogene Suspension der Vorläuferverbindungen vor. Das im Schritt (b) erhaltene Fällungsprodukt kann erst isoliert und dann zum Beispiel durch Calcinieren in einer inerten oder reduzierenden Atmosphäre zum fertigen Lithiummetallphosphat umgesetzt werden. In einer bevorzugten Ausführungsförm erfolgt die Umsetzung zum Lithiummetallphosphat jedoch direkt unter hydrothermalen Bedingungen und besonders bevorzugt werden die Schritte (a), .(b), sowie (c) alle im Hydrothermalbehälter ausgeführt (Ein-Topfverfahren).

Durch die Dispergier- oder Mahlbehandlung wird sichergestellt, dass die Fällung sehr homogen abläuft und eine homogene Mischung aus vielen kleinen, etwa gleich großen Kristallkeimen entsteht.

Diese Kristallkeime können in den nachfolgenden Prozessschritten und bevorzugt in einer hydrothermalen Behandlung zu sehr gleichmäßig gewachsenen Kristallen des Endproduktes LiMPO₄ mit einer sehr engen Partikelgrößenverteilung umgesetzt werden.

Als polares Lösungsmittel können beispielsweise Wasser, Methanol, Ethanol, 2-Propanol, Ethylenglycol, Propylenglycol, Aceton, Cyclohexanon, 2-Methylpyrrolidon, Ethylmethylketon, 2-Ethoxyethanol, Propylencarbonat, Ethylencarbonat, Dimethylcarbonat, Dimethylformamid oder Dimethylsulfoxid bzw. Gemische dieser Lösungsmittel angeführt werden. Wasser ist als Lösungsmittel bevorzugt.

Unter einer Umsetzung der im Schritt (b) erhaltenen Mischung bzw. Suspension unter hydrothermalen Bedingungen wird im Rahmen der vorliegenden Erfindung jede Behandlung bei einer Temperatur über Raumtemperatur und einem Dampfdruck über 1 bar angesehen. Die Hydrothermalbehandlung an sich kann in dem Fachmann geläufiger und bekannter Weise durchgeführt werden. Zur Einstellung der hydrothermalen Bedingungen werden vorzugsweise Temperaturen zwischen 100 und 250° C, insbesondere 100 bis 180° C sowie Drücke zwischen 1 bar und 40 bar, insbesondere 1 bar und 10 bar Dampfdruck verwendet. Die Umsetzung erfolgt bevorzugt in einem dicht verschlossenen bzw. druckbeständigen Gefäß. Vorzugsweise wird die Umsetzung unter einer Inert- oder Schutzgasatmosphäre durchgeführt. Geeignete inerte Gase sind beispielsweise Stickstoff, Argon, Kohlendioxid, Kohlenmonoxid oder deren Gemische, wobei Stickstoff bevorzugt wird. Die Hydrothermalbehandlung kann beispielsweise über 0,5 bis 15 Stunden, insbesondere über 3 bis 11 Stunden durchgeführt werden. Nur als nicht beschränkendes Beispiel können folgende konkrete Bedingungen gewählt werden: 1,5 Stunden Aufheizzeit von 50° C (Temperatur der in Schritt (b) erhaltenen Mischung) auf 160° C, 10 Stunden Hydrothermalbehandlung bei 160° C, 3 Stunden Abkühlung von 160° C auf 30° C.

Das mit dem erfindungsgemäßen Verfahren hergestellte und abgetrennte Fällungsprodukt oder das hydrothermal erhaltene Lithiummetallphosphat LiMPO₄ kann innerhalb Schritt (c) getrocknet und/oder calciniert werden. Auch eine sorgfältige Trocknung/Nachtrocknung des Endprodukts ist u.a. für die elektrochemische Qualität des erhaltenen Lithiummetallphosphats in der Regel erforderlich, da schon geringe Feuchtigkeitsspuren bei der elektrochemischen Anwendung des Materials in Lithiumsekundärbatterien Probleme bewirken können, wie eine Zersetzung des Leitsalzes LiPF₆.

Die Trocknung/Calcinierung des abgetrennten Fällungsproduktes oder des hydrothermal erhaltenen Lithiummetallphospliats LiMPO₄ in Schritt (c) kann über einen weiten Temperaturbereich von etwa 50 bis 750° C vorgenommen werden, wobei die Temperatur auch von wirtschaftlichen Erwägungen abhängt. Falls die Herstellung des LiMPO₄ in Abwesenheit einer kohlenstoffhaltigen oder elektronenleitfähigen Substanz bzw. eines Vorläufers davon vorgenommen wird, wird in den meisten Fällen eine Trocknung zwischen etwa 50 und 350° C, beispielsweise über 3 Stunden bei 250° C unter Verwendung von Stickstoff 5,0, Vakuum oder Formiergas, ausreichend sein. Die Trocknungsbedingungen sollten so gewählt sein, dass. keine Oxidation von M(II) zu M(III), insbesondere von Fe(II) zu Fe(III) eintritt, was durch Routineuntersuchungen festgelegt werden kann. Die Trocknung kann beispielsweise in einem Vakuumtrockenschrank erfolgen.

Soweit die Herstellung des LiMPO₄ in Anwesenheit einer kohlenstoffhaltigen elektronenleitfähigen Substanz bzw. eines Vorläufers davon durchgeführt wird, wird in der Regel eine mittlere Trocknungstemperatur oberhalb von 500 bzw. 700° C unter inerten oder reduzierenden Bedingungen gewählt. Insbesondere kann eine Calcinierung erfolgen, wobei beispielsweise 3 Stunden bei etwa 750° C unter Verwendung von Stickstoff 5,0 erhitzt werden kann.

Erst bei ausreichend hohen Temperaturen erhält man dabei den gewünschten leitfähigen Überzug aus der kohlenstoffhaltigen bzw. elektronenleitfähigen Substanz. Die Bedingungen werden geeignet so gewählt, dass einerseits keine Oxidation von M(II) zu M(III), insbesondere von Fe(II) nach Fe(III) eintritt und andererseits keine Reduktion des M(II), beispielsweise zu Phosphiden auftritt. Die Calcinierung kann in dem Fachmann bekannten Vorrichtungen erfolgen.

Zu große LiFePO₄ Partikel führen bei hohen Lade-/Entladeraten (hohen Lade-/Entladeströmen) zu einer kinetisch kontrollierten Begrenzung der einem Akkumulator entnehmbaren Kapazität, d.h. die Lithiumionen können beim Entladen nicht mehr schnell genug durch die Grenzschicht LiMPO₄/MPO₄ wandern und die spezifische Kapazität der Elektrode fällt bei hohen Lade-/Entladeraten stark ab. Für einen kommerziellen Einsatz des Lithiumeisenphosphats ist aber eine ausreichende spezifische Kapazität auch bei hohen Lade-/Entladeströmen wichtig.

Die Partikelgrößenverteilung des mit dem erfindungsgemäßen Verfahren erhaltenen LiMPO₄ ist vorzugsweise sehr eng, wobei nach einer besonders bevorzugten Ausführungsform die Differenz zwischen dem D₉₀-Wert und dem D₁₀-Wert nicht mehr als 2 µm, vorzugsweise nicht mehr als 1,5 µm, insbesondere nicht mehr als 1 µm, besonders bevorzugt nicht mehr als 0,5 µm beträgt.

Nach einer bevorzugten erfindungsgemäßen Ausführungsform erfolgt die Umsetzung in Anwesenheit weiterer Komponenten, insbesondere einer elektronenleitfähigen Substanz. Dazu wird vorzugsweise ein kohlenstoffhaltiger Feststoff, wie Kohle, insbesondere Leitkohle, oder Kohlefasern verwendet. Es kann auch ein Vorläufer einer elektronenleitfähigen Substanz bzw. des kohlenstoffhaltigen Feststoffs eingesetzt werden, der sich bei der Trocknung bzw. Calcinierung des LiMPO₄ in Kohlenstoffpartikel umwandelt, wie ein Kohlenhydrat. Vorzugsweise sind die in dem fertigen LiMPO₄-Produkt enthaltenen Kohlenstoffpartikel homogen verteilt.

Prinzipiell ist jedes dem Fachmann geläufige Verfahren zur Einbringung von Kohle oder kohlenstoffhaltigem, elektrisch leitfähigem Material bzw. die Vermischung mit weiteren Komponenten geeignet. Auch eine intensive Vermischung oder Vermahlung des fertigen LiMPO₄ mit mindestens einem kohlenstoffhaltigen Feststoff, wie Leitkohle, ist möglich. Weitere mögliche Verfahren sind das Aufziehen von Kohlepartikeln auf die Oberfläche der LiMPO₄-Partikel in einer wässrigen oder nicht-wässrigen Suspension oder die Pyrolyse eines Gemenges aus LiMPO₄-Pulver oder LiMPO₄-Precursor, wie das in Schritt (b) erhaltene Fällungsprodukt, mit einem Kohlenstoff-Vorläufermaterial. Das so erhaltene kohlenstoffhaltige LiMPO₄ enthält in der Regel bis zu 10 Gew.-%, vorzugsweise bis zu 5 Gew.-%, besonders bevorzugt bis zu 2,5 Gew.-% Kohle.

Technisch bevorzugt ist ein Pyrolyseverfahren, bei dem in Schritt (c) mindestens ein Kohlenstoff-Vorläufermaterial, vorzugsweise ein Kohlenhydrat, wie Zucker oder Zellulose, und besonders bevorzugt Lactose, mit dem nach der Fällung abgetrennten Fällungsprodukt oder mit dem nach der Hydrothermalbehandlung abgetrennten LiMPO₄-Pulver vermengt wird, z.B. durch Verkneten, wobei Wasser als Hilfsmittel zugegeben werden kann. Technisch besonders bevorzugt wird dieses Vermengen nach dem Waschen, aber noch vor dem Trocknen des feuchten Fällungsprodukts oder LiMPO₄-Pulvers zugegeben. Anschließend wird das Gemenge unter Schutzgas, an Luft oder im Vakuum bei Temperaturen von vorzugsweise 50° C bis 500° C getrocknet und unter Schutzgas, wie z.B. Stickstoff 5.0 oder Argon, auf eine Temperatur zwischen 500° C und 1000° C, bevorzugt zwischen 700° C und 800° C erhitzt, wobei das Kohlenstoffvorläufermaterial zu Kohle pyrolysiert wird. Anschließend erfolgt vorzugsweise eine Deagglomerationsbehandlung, beispielsweise in einer Rotations-Siebmühle).

Der Kohleanteil verbessert auch die Verarbeitbarkeit des mit dem erfindungsgemäßen Verfahren erhaltenen LiMPO₄-Pulvers zu Batterieelektroden durch Veränderung der Oberflächeneigenschaften und/oder verbessert die elektrische Anbindung in der Batterieelektrode.

Das erfindungsgemäße Verfahren wird im folgenden anhand von nicht beschränkenden Beispielen und anhand idealisierter Reaktionsgleichungen sowie unter Bezugnahme auf die beigefügten Figuren näher erläutert. Dabei zeigt:
- Fig. 1: eine schematische Darstellung eines Verfahrens, wie es aus der DE 103 53 266 bekannt ist;
- Fig. 2: eine schematische Darstellung des erfindungsgemäßen Verfahrens;
- Fig. 3: eine Grafik, welche die theoretisch berechnete Lithium-Restkonzentration im Abwasser in Abhängigkeit von pH-Wert und Phosphat-Restkonzentration darstellt;
- Fig. 4: ein Röntgenbeugungsprofil eines ausgefällten Li₃PO₄ aus Beispiel 1;
- Fig. 5: eine rasterelektronenmikroskopische Aufnahme eines ausgefällten Li₃PO₄ aus Beispiel 1;
- Fig. 6: eine Partikelgrößenverteilung nach Lasergranulometrie eines ausgefällte Li₃PO₄ aus Beispiel 1;
- Fig. 7: ein Röntgenbeugungsprofil des hydrothermal erhaltenen Lithiumeisenphosphats aus Beispiel 3;
- Fig. 8: eine Partikelgrößenverteilung nach Lasergranulometrie des hydrothermal erhaltenen Lithiumeisenphosphats aus Beispiel 3;
- Fig. 9: eine REM-Aufnahme des hydrothermal erhaltenen Lithiumeisenphosphats aus Beispiel 3;
- Fig. 10: eine Partikelgrößenverteilung nach Lasergranulometrie des Fällungsproduktes vor der Hydrothermalbehandlung aus Beispiel 3;

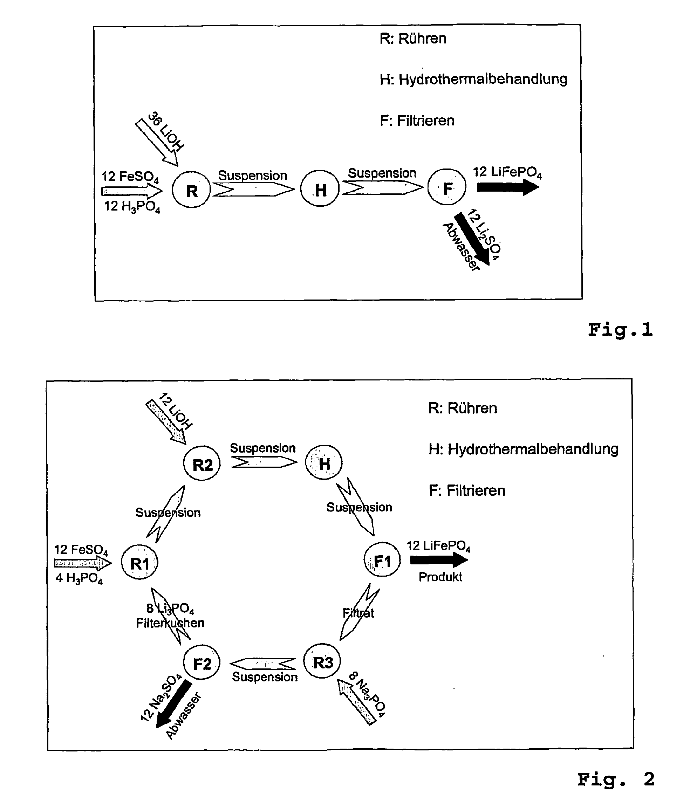

In Fig. 1 ist ein Verfahren dargestellt, wie es aus der DE 103 53 266 bekannt ist. In einem ersten Schritt werden 36 Äquivalente Lithiumhydroxid sowie 12 Äquivalente Eisensulfat und 12 Äquivalente Phosphorsäure in Form ihrer wässrigen Lösungen unter starker Dispergier- und Mahlwirkung umgesetzt (R). Dabei reagiert das Eisensulfat mit der Phosphorsäure nach der folgenden Reaktionsgleichung zu Eisen(II)phosphat-Oktahydrat (=synthetischer Vivianit).

12 FeSO₂ (aq) + 12 H₃PO₄ (aq) + 36 LiOH (aq) → → 4 Fe₃(PO₄)₂ · 8 H₂O (s) + 4 Li₃PO₄ + 12 Li₂SO₄ (aq)

Die erhaltene Precursormischung wird dann unter hydrothermalen Bedingungen zum gewünschten phasenreinen Lithiumeisenphosphat umgesetzt (H). Die Umsetzung erfolgt nach der folgenden Gleichung:

4 Fe₃(PO₄)₂ · 8 H₂O (s) + 4 Li₃PO₄ + 12 Li₂SO₄ (aq) → → 12 LiFePO₄ (s) + 12 Li₂SO₄ (aq)

Das entstandene LiFePO₄ kann durch Filtration (F) abgetrennt werden und stellt das gewünschte Endprodukt dar. Im Abwasser bleiben 12 Li₂SO₄, welche entweder aufgearbeitet oder einer sonstigen Entsorgung zugeführt werden müssen. Bei der in Fig. 1 dargestellten Reaktionsführung werden also 36 Äquivalente Lithium eingesetzt, wovon ein Drittel (12 Äquivalente) zum gewünschten Endprodukt LiFePO₄ umgesetzt werden und 24 Äquivalente als Abfall in Form von Li₂SO₄ entsorgt werden müssen.

In Fig. 2 ist schematisch das erfindungsgemäße Verfahren dargestellt. In einem ersten Schritt wird festes Lithiumorthophosphat mit Eisensulfat und Phosphorsäure zu Vivianit, Lithiumdihydrogenphosphat, Eisensulfat und Lithiumsulfat gemäß der folgenden Gleichung umgesetzt (R1):

R1 8 Li₃PO₄ (s) + 12 FeSO₄ (aq) + 4 H₃PO₄ (aq) → → 3 Fe₃(PO₄)₂ · 8 H₂O (s) + 6 LiH₂PO₄ (aq) + 3 FeSO₄ (aq) + + 9 Li₂SO₄ (aq)

Zu dieser Suspension wird dann im Schritt R2 Lithiumhydroxid gegeben, wodurch das in der Lösung verbliebene Eisensulfat als Vivianit ausgefällt wird und das Lithium in das entsprechende Phosphat überführt wird. Die Umsetzung erfolgt nach folgender Reaktionsgleichung:

R2 3 Fe₃ (PO₄)₂ · 8 H₂O (s) + 6 LiH₂PO₄ (aq) + 3 FeSO₄ (aq) + 9 Li₂SO₄ (aq) + 12 LiOH (aq) → → 4 Fe₃(PO₄)₂ · 8 H₂O (s) + 4 Li₃PO₄ (s, aq) + 12 Li₂SO₄ (aq)

Die im Schritt R2 erhaltene Mischung entspricht einer Zusammensetzung, wie sie in der Umsetzung R1 im Verfahren nach Fig. 1 erhalten wird.

Analog zum Schritt H aus Fig. 1 erfolgt nun eine hydrothermale Umsetzung, wobei das Lithiumeisenphosphat als Feststoff in möglichst phasenreiner Form gewonnen wird (H).

H 4 Fe₃(PO₄)₂ · 8 H₂O (s) + 4 Li₃PO₄ + 12 Li₂SO₄ (aq) → → 12 LiFePO₄ (s) + 12 Li₂SO₄ (aq)

Die Reaktion ergibt 12 Äquivalente des gewünschten Lithiumeisenphosphats.

Nach Abtrennung des Lithiumeisenphosphats durch Filtration (F1) fällt ein Filtrat an, in welchem 12 Äquivalente Li₂SO₄ gelöst sind.

Durch Zugabe von Natriumphosphat werden die Lithiumionen in Form von Lithiumorthophosphat ausgefällt (R3).

R3 12 Li₂SO₄ (aq) + 8 Na₃PO₄ (aq) → → 8 Li₃PO₄ (s) + 12 Na₂SO₄ (aq)

Der Niederschlag kann abgetrennt werden (F2) und das Lithiumorthophosphat wieder in den Schritt R1 zurückgeführt werden. Im Filtrat sind noch 12 Äquivalente Na₂SO₄ enthalten, welche im Abwasser entsorgt werden.

Insgesamt werden bei den im Fig. 2 dargestellten zyklischen Verfahren 12 Äquivalente Lithiumhydroxid, 12 Äquivalente Eisensulfat, 4 Äquivalente Phosphorsäure sowie 8 Äquivalente Natriumorthophosphat zugeführt und diese zu 12 Äquivalenten LiFePO₄ sowie 12 Äquivalenten Na₂SO₄ umgesetzt. Im Vergleich zum Verfahren aus Fig. 1 wird also das im Abwasser enthaltene Li₂SO₄ durch Na₂SO₄ ersetzt.

### Bestimmung der Partikelgrößenverteilung:

Die Partikelgrößenverteilungen für die Precursorsuspensionen und das erzeugte LiMPO₄ wird mittels Lichtstreuung unter Verwendung handelsüblicher Vorrichtungen bestimmt. Diese Methode ist dem Fachmann bekannt, wobei auch auf die Offenbarung hierzu in der JP 2002-151082 und der WO 02/083555 verwiesen und Bezug genommen wird. In den Beispielen wurde die Partikelgrößenverteilung mit Hilfe eines Laserbeugungsmessgerätes (auf Mastersizer S, Firma Malvern Instruments GmbH, Herrenberg, DE) und der Software des Herstellers (Version 2.19) mit einem Malvern Small Volume Simple Dispersion Unit, DIF 2002 als Messeinheit bestimmt. Es wurden folgende Messbedingungen gewählt: Compressed range; active beam length 2,4 mm; Messbereich: 300 RF; 0,05 bis 900 µm. Die Probenvorbereitung und -messung erfolgte nach den Herstellerangaben.

Die D₁₀-Werte, D₅₀-Werte, sowie D₉₀-Werte beziehen sich auf den Volumenanteil der jeweiligen Partikel am Gesamtvolumen. Die D₁₀-, D₅₀- und D₉₀-Werte geben also diejenigen Werte an, bei dem 10 Volumen-% bzw. 50 Volumen-% bzw. 90 Volumen-% der Partikel in der gemessenen Probe einen kleineren oder gleichen Partikeldurchmesser aufweisen..

### Beispiel 1: Fällung von Li₃PO₄ mit Na₃PO₄

Ein aus der Herstellung von LiFePO₄ nach Fig. 1 anfallendes Abwasser mit einem Lithiumgehalt von 8,5 g/l bezogen auf das Kation wurde mit stöchiometrischen sowie mit um 10 % überschüssigen Mengen einer gesättigten Na₃PO₄-Lösung (25 g Na₃PO₄·8 H₂O auf 100 ml vollentsalztem Wasser) als Fällungsmittel versetzt, um Li₃PO₄ zu fällen. Die Abwassermenge betrug jeweils 50 ml und die Lösungen wurden rasch zusammengeschüttet und dann 1 Stunde auf dem Magnetrührer gerührt. Nach Abnutschen und Waschen auf einem Papierfilter wurden die Filterkuchen bei 60° C getrocknet. Die Filtrate wurden anschließend in drei gleiche Teile geteilt und jeweils mit 50%-iger Natronlauge auf abgestuft erhöhte pH-Werte eingestellt, um sie auf Nachfällen bei pH-Erhöhung zu testen. Tabelle 1 zeigt die Analysenwerte dieser Lösungen nach Abnutschen auf einem Membranfilter sowie die Trockengewichte der Filterkuchen. Es wurden demnach bis zu 90% des Lithiums aus dem Abwasser als Lithiumorthophosphat zurückgewonnen. Ein Erhöhen des pH-Wertes führte in diesen Versuchen nicht zu einer nennenswerten Erhöhung der Ausbeute.

**Tabelle 1: Analysenwerte nach Fällung mit Na₃PO₄ und Filtration**

| Na₃PO₄ ·12H₂O Lösung | NaOH | pH-Wert | Li-Gehalt | Phosphat-Gehalt | Ausbeute Li₃PO₄ | Nachfällung |
|---|---|---|---|---|---|---|
| | | | | | | |
| 7,76g auf 31,0ml VE | 0 Tr. | 12 | 0,52g/l | 4,1g/l | 2,43g | |
| (stöchiometr.) | 4 Tr. | 13 | 0,53g/l | 4,2g/l | - - | n. wägbar |
| | 10 Tr. | 14 | 0,53g/l | 4,2g/l | - - | n. wägbar |
| | | | | | | |
| 8,53g auf 34,1ml VE | 0 Tr. | 12 | 0,55g/l | 6,7g/l | 2,30g | |
| (10% Überschuss) | 4 Tr. | 13 | 0,57g/l | 7,0g/l | - - | n. wägbar |
| | 10 Tr. | 14 | 0,58g/l | 7,1g/l | - - | n. wägbar |

| | | | | | | |
|---|---|---|---|---|---|---|
| VE: vollentsalztes Wasser | | | | | | |

Aus 100 ml eines weiteren Abwassers, welches einen Lithiumgehalt von 5,6 g/l aufwies, wurde ebenfalls Li₃PO₄ durch stöchiometrisches Zugeben von Na₃PO₄ gefällt. Die entsprechenden Ergebnisse sind in Tabelle 2 aufgeführt.

**Tabelle 2: Analysenwerte nach Fällung mit Na₃PO₄ und Filtration**

| Na₃PO₄·12H₂O Lösung | NaOH | pH-Wert | Li-Gehalt | Phosphat | Filterkuchen | Nachfällung |
|---|---|---|---|---|---|---|
| | | | | | | |
| 10,2g auf 40,9mol VE | 0 Tr. | 12 | 0,57g/l | 1,5g/l | 3,26g | |
| (stöchiometr.) | 5 Tr. | 13 | 0,58g/l | 1,5g/l | - - | n. wägbar |
| | 15 Tr. | 14 | 0,57g/l | 1,5g/l | - - | n. wägbar |

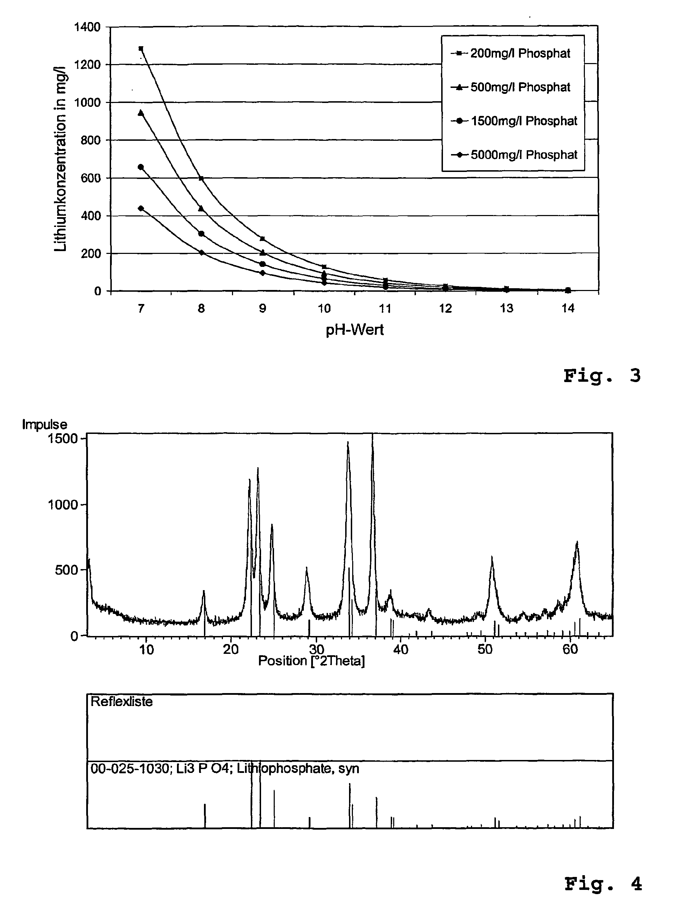

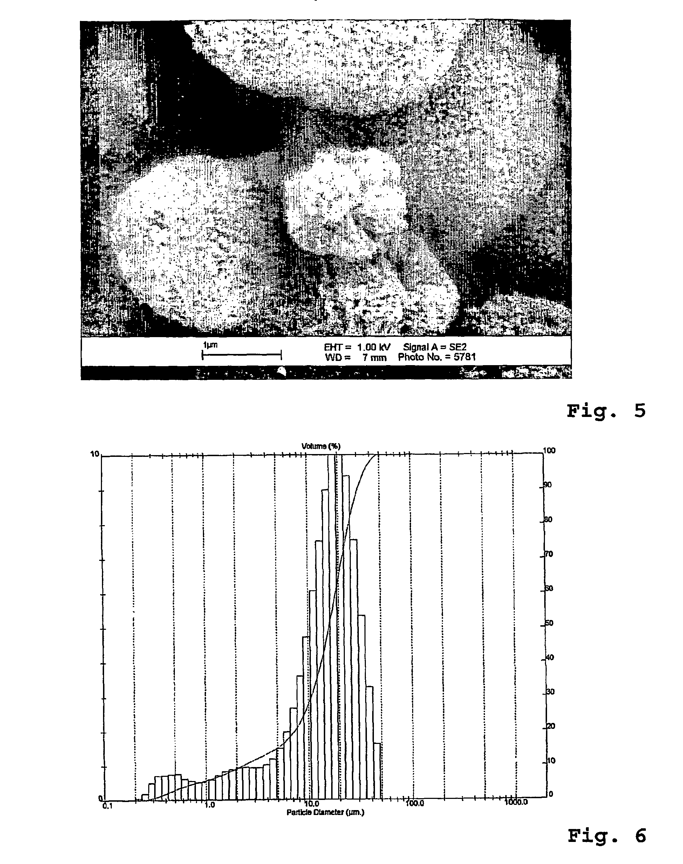

Die im praktischen Versuch beobachteten Restgehalte an Lithium und Phosphat liegen höher als die theoretisch berechneten Gleichgewichtswerte, die sich aus den Löslichkeitsprodukten und Protolysekonstanten der am Fällungsgleichgewicht beteiligten Spezies ergeben. Die berechneten Werte für die im Abwasser verbleibende Lithiumkonzentration in Abhängigkeit vom pH-Wert sind in Fig. 3 für verschiedene Phosphatkonzentrationen dargestellt. Nach dem in Fig. 4 dargestellten Röntgenbeugungsprofil (XRD) besteht das Fällungsprodukt aus phasenreinem Li₃PO₄. Die Natrium- und Sulfatgehalte nach dem Waschen schwanken zwischen 0,8 und 1,4 Gew.-%, bzw. 1,1 und 1,5 Gew.-%. Fig. 5 zeigt eine REM-Aufnahme des gefällten Li₃PO₄-Pulvers. Es besteht aus kleinen stängeligen Primärkristallen, die zu radialstrahligen sphärischen Sekundärpartikeln im µm-Bereich zusammengelagert sind. Die sphärischen Sekundärpartikel wiederum bilden unregelmäßig geformte Agglomerate mit einem D₅₀-Wert von 16 µm, wie die in Fig. 6 dargestellte Partikelgrößenverteilung nach Lasergranulometrie zeigt.

### Beispiel 2: Umsetzen von Li₃PO₄ zu Vivianit mit Eisensulfat und Phosphorsäure und Reduktionsmittel

Es wurden jeweils 3 g des in Beispiel 1 erhaltenen Lithium-orthophosphatpulvers in einer Lösung aus 10,8 g Eisen(II)sulfat-Heptahydrat, 1,49 g 85%-iger Phosphorsäure und 38,9 g Wasser aufgeschlämmt und im Becherglas eine Stunde lang gerührt. Die Bechergläser wurden mit einer Folie abgedeckt, um den Luftzutritt zu reduzieren. Zur sauren Lösung wurden zudem 0, 1 bzw. 5 mol-% Schweflige Säure (bezogen auf Fe) in Form einer 5%-igen Lösung als Reduktionsmittel zugegeben. Die sich sofort bildende blass-himmelblaue Suspension wurde auf einer Membran abgenutscht und der gewaschene Filterkuchen zwei Stunden bei 70° C getrocknet. Das so erhaltene himmelblaue Pulver besteht lt. XRD aus praktisch phasenreinem synthetischem Vivianit. Tabelle 3 fasst die Analysenwerte der Filtrate zusammen.

**Tabelle 3: Analysenwerte der Filtrate nach Umsetzen von Li₃PO₄ mit Fe(II)sulfat und Phosphorsäure und Filtration**

| Zugabe H₂SO₃ | pH-Wert | Li-Gehalt | Phosphat | Fe-Gehalt | Filterkuchen |
|---|---|---|---|---|---|
| | | | | | |
| 0 | 3 | 0,93% | 2,8% | 1,5% | 5,123g |
| 1 mol% (Fe) | 4 | 0,88% | 2,7% | 1,4% | 5,261g |
| 5 mol% (Fe) | 5 | 0,84% | 2,7% | 1,5% | 5,340g |

### Beispiel 3: Herstellen von Lithiumeisenphosphat nach dem Kreisprozess

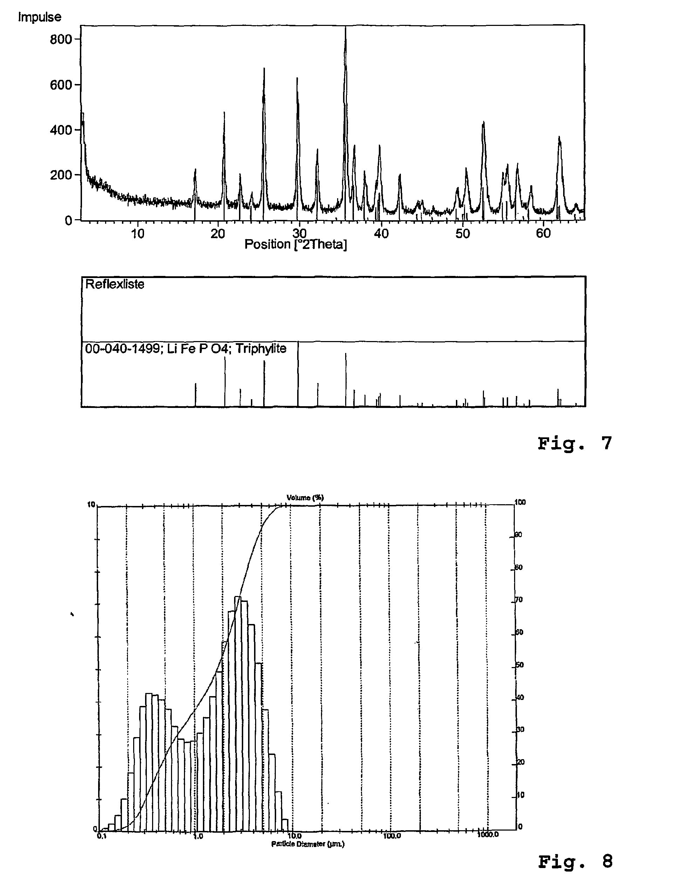

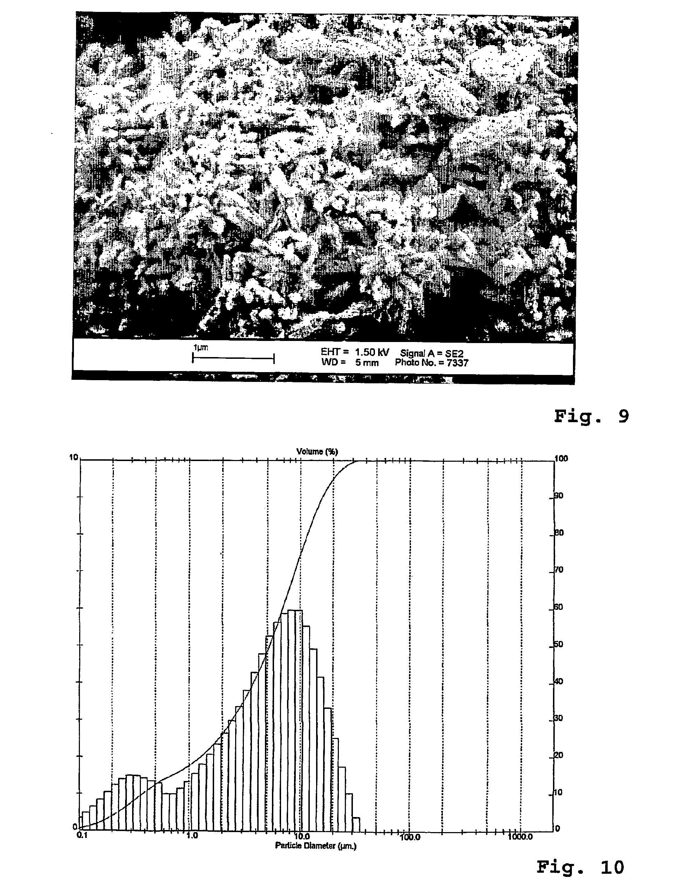

120 g Lithiumorthophosphat werden in 0,8 1 VE-Wasser in einem Parr Rühr-Autoklaven mit Schrägblattrührer, 3,8 1 Nennvolumen und Parr 4842 Regelungseinheit aufgeschlämmt und mit Stickstoff 5.0 begast. Anschließend werden 432,17 g Eisen(II)sulfat-Heptahydrat und 59,74 g 85%-iger Phosphorsäure, gelöst in 2l Wasser, langsam zugepumpt. Die Suspension wird dabei für 1 h mit dem Schrägblattrührer gerührt und währenddessen durch einen Dispergator (IKA-Laborpilot UTL2000/4 mit mittlerem Generator) umgepumpt. Unter anhaltendem Dispergieren werden dann 66,48 g Lithiumhydroxid-Monohydrat (gelöst in 0,8 1 Wasser) zugegeben.
Nach diesem Vorgang wird der Rühr-Autoklav vom Dispergator getrennt und druckfest verschlossen. Der noch im Dispergator befindliche Anteil der Suspension wird auf einer Filtermembran abgenutscht und gewaschen und als Probe des Fällungsproduktes verwendet. Für die Hydrothermalbehandlung des Autoklaveninhalts wird der Rühr-Autoklav innerhalb 1,5 h auf 160° C aufgeheizt und für 10 h unter fortlaufendem Rühren auf dieser Temperatur gehalten. Nach dem Abkühlen wird die grauweiße Suspension im Druckfilter auf Papier filtriert und bis zu einem Leitwert von 200 µS/cm gewaschen. Der langsam zerfließende Filterkuchen wird über Nacht bei 70° C im Vakuumofen getrocknet und in einer Labor-Rotormühle ("Fritsch Pulverisette 14") mit 0,08 mm Sieb deagglomeriert. Laut XRD ist das so erhaltene grauweiße Pulver phasenreiner Triphylin (Fig. 7). Lasergranulometrisch (Malvern Mastersizer S Version 2.19) ergibt sich eine leicht bimodale Partikelgrößenverteilung mit einem volumenbezogenen D₁₀-Wert von 0,3 µm, einem D₅₀-Wert von 1,8 µm und einem D₉₀-Wert von 4,5 µm (Fig. 8). Die spezifische Oberfläche nach BET beträgt ca. 15 m²/g. Eine REM-Aufnahme des erhaltenen Lithiumeisenphosphat-Pulvers ist in Fig. 9 abgebildet.

Laut Röntgenbeugung besteht das aus dem Dispergator entnommene grünliche Fällungsprodukt aus einem Gemenge von Vivianit und Lithiumorthophosphat. Die in Fig. 10 gezeigte Partikelgrößenverteilung weist einen volumenbezogenen D₁₀-Wert von 0,4 µm, einen D₅₀-Wert von 5,2 µm und einen D₉₀-Wert von 15,9 µm aus.

Die Analysenwerte für das zugehörige abgetrennte Filtrat sind 1 mg/l Fe, 28 mg/l Phosphat und 7,1 g/l Li. Das entsprechende sehr niedrige Phosphat/Lithium-Stoffmengenverhältnis von 3 : 10.000 zeigt, dass der Lithiumphosphat-Anteil nach der Fällungsreaktion überwiegend als Feststoff und nicht als Lösung vorliegt. Der Feststoff kann daher durch Calcinieren in reduzieren- oder oder inerter Athmosphäre, mit oder ohne Anwesenheit einer kohlenstoffhaltigen Vorläufersubstanz, zu weitgehend phasenreinem Lithiumeisenphosphat umgesetzt werden.

## Patentansprüche

1. Verfahren zur Herstellung von Lithiummetallphosphaten der Formel LiMPO₄, in welcher M mindestens ein zweiwertiges Metall bedeutet, umfassend die folgenden Schritte:
a) Umsetzen von Lithiumphosphat mit mindestens einem Metallsalz MXₙ und einer sauren Phosphatquelle, in einem polaren Lösungsmittel, wobei X ein Anion ist, welches mit dem Metall M ein in dem Lösungsmittel lösliches Salz bildet, und n der Quotient der Wertigkeit des Metalls M und der Wertigkeit des Anions X ist, wobei eine Suspension von mindestens einem M-haltigen Phosphat in dem Lösungsmittel erhalten wird;
b) Zugabe einer basischen Lithiumquelle zu der in Schritt (a) erhaltenen Suspension des M-haltigen Phosphats in dem Lösungsmittel, wobei ein Fällungsprodukt erhalten wird;
c) Umsetzen des in (b) erhaltenen Fällungsprodukts zu einem Lithiummetallphosphat der Formel LiMPO₄, wobei eine Restlösung erhalten wird, die Lithiumionen enthält;
d) Zugabe einer basischen Phosphatquelle zur Restlösung, so dass Lithiumphosphat aus der Restlösung ausgefällt wird;
e) Abtrennen der Lithiumphosphat-Verbindung.

2. Verfahren nach Anspruch 1, wobei das in Schritt (e) erhaltene Lithiumphosphat in den Schritt (a) rückgeführt wird.

3. Verfahren nach Anspruch 1 oder 2, wobei M mindestens ein Übergangsmetall, bevorzugt ausgewählt aus der Gruppe von Fe, Mn, Co und Ni, insbesondere Fe ist.

4. Verfahren nach einem der vorhergehenden Ansprüche, bei dem das Lithiumphosphat Lithiumorthophosphat ist.

5. Verfahren nach einem der vorhergehenden Ansprüche, wobei X ausgewählt ist aus der Gruppe von Chlorid, Nitrat und Sulfat, I insbesondere Sulfat ist.

6. Verfahren nach einem der vorhergehenden Ansprüche, wobei der pH der Lösung in Schritt (a) von einem Wert kleiner 2 auf einen Wert zwischen 2 und 6 und in Schritt (b) auf einen Wert zwischen 6 und 8 erhöht wird.

7. Verfahren nach einem der vorhergehenden Ansprüche, wobei in Schritt (a) und/oder (b) ein Reduktionsmittel zugegeben wird.

8. Verfahren nach einem der vorhergehenden Ansprüche, wobei das polare Lösungsmittel Wasser ist.

9. Verfahren nach einem der vorhergehenden Ansprüche, wobei die in Schritt (a) verwendete saure Phosphatquelle eine Phosphorsäureverbindung, insbesondere Orthophosphorsäure ist.

10. Verfahren nach einem der vorhergehenden Ansprüche, wobei die in Schritt (b) verwendete basische Lithiumquelle Lithiumhydroxid und/oder Lithiumoxid ist.

11. Verfahren nach einem der vorhergehenden Ansprüche, wobei die in Schritt (d) verwendete basische Phosphatquelle ein Alkaliphosphat ist, insbesondere Natriumphosphat.

12. Verfahren nach einem der vorhergehenden Ansprüche, wobei die Umsetzungen in Schritt (a) und (b) bei einer Temperatur zwischen 5° und 80° C, bevorzugt zwischen 15° und 50° C, insbesondere bevorzugt bei Raumtemperatur erfolgen.

13. Verfahren nach einem der vorhergehenden Ansprüche, wobei in den Schritten (a), (b) und/oder (c) eine Dispergier- oder Mahlbehandlung der Suspension erfolgt, bis der D₉₀-Wert der in der Suspension enthaltenen Partikel weniger als 50 µm beträgt.

14. Verfahren nach Anspruch 13, wobei der D₉₀-Wert der in der Suspension enthaltenen Partikel weniger als 25 µm, vorzugsweise weniger als 20 µm, insbesondere bevorzugt weniger als 15 µm beträgt.

15. Verfahren nach Anspruch 13 oder 14, wobei die Dispergier- oder Mahlbehandlung in den Schritten (a) und/oder (b) erfolgt.

16. Verfahren nach einem der Ansprüche 13 bis 15, wobei die Dispergier- oder Mahlbehandlung in Schritt (a) vor der Zugabe des Metallsalz MXₙ und/oder in Schritt (b) vor der Zugabe des Lithiumhydroxids beginnt und bis zur vollständigen Umsetzung der Lithiumphosphat-Verbindung in Schritt (a) bzw. des M-haltigen Phosphats in Schritt (b) fortgesetzt wird.

17. Verfahren nach einem der vorhergehenden Ansprüche, wobei in den Schritten (a) und/oder (b) und/oder (c) eine kohlenstoffhaltige und/oder eine elektronenleitfähige Substanz und/oder eine Vorläuferverbindung einer elektronenleitfähigen Substanz zugegeben wird.

18. Verfahren nach Anspruch 17; wobei die elektronenleitfähige Substanz ausgewählt ist aus Kohle, insbesondere Leitkohle, und Kohlefasern.

19. Verfahren nach Anspruch 17, wobei die Vorläuferverbindung einer elektronenleitfähigen Substanz eine kohlenstoffhaltige Verbindung, insbesondere ein Kohlenhydrat, und besonders bevorzugt Lactose ist.

20. Verfahren nach einem der vorhergehenden Ansprüche, wobei die Komponenten in einem Verhältnis Li₃PO₄ : MXₙ : H₃PO₄ von etwa 8 : 12 : 4 eingesetzt werden.

21. Verfahren nach einem der vorhergehenden Ansprüche, wobei in Schritt (b) die basische Lithiumquelle in einer Menge von etwa 12 Äquivalenten zugegeben wird.

22. Verfahren nach einem der vorhergehenden Ansprüche, wobei die Schritte (a) und/oder (b) und/oder (c) unter einer Inertgasatmosphäre durchgeführt werden.

23. Verfahren nach einem der Ansprüche 13 bis 22, wobei die Dispergier- oder Mahlbehandlung der Suspension mit einem Dispergator (mit oder ohne Pumprotor), einem Ultraturrax^{®} -Rührer, einer Mühle, einem Intensivmischer, einer Kreiselpumpe, einem In-Line-Mischer, einer Mischdüse oder einem Ultraschallgerät erfolgt.

24. Verfahren nach einem der vorstehenden Ansprüche, bei dem das suspendierte Fällungsprodukt aus Schritt (b) in Schritt (c) abgetrennt, gegebenenfalls gewaschen und getrocknet, und dann durch Calcinieren unter inerten oder reduzierenden Bedingungen zum Lithiummetallphosphat umgesetzt wird.

25. Verfahren nach einem der Ansprüche bis 23, bei dem das suspendierte Fällungsprodukt aus Schritt (b) in Schritt (c) unter hydrothermalen Bedingungen direkt zu Lithiummetallphosphat umgesetzt wird.

26. Verfahren nach Anspruch 25, wobei in Schritt (c) die Umsetzung unter hydrothermalen Bedingungen bei Temperaturen zwischen 100 und 250 ° C, insbesondere zwischen 100 und 180 ° C, und einem Druck zwischen 1 bar und 40 bar, insbesondere 1 bar und 10 bar Dampfdruck durchgeführt wird.

27. Verfahren nach einem der Ansprüche 24 bis 26, wobei das in Schritt (c) abgetrennte und gegebenenfalls gewaschene Fällungsprodukt oder Lithiummetallphosphat, vorzugsweise noch vor einem Trocknungsschritt, mit einer kohlenstoffhaltigen Vorläuferverbindung, bevorzugt einem Kohlenhydrat, insbesondere bevorzugt Lactose, vermengt wird, bei einer Temperatur von 50° bis 500° C getrocknet und bei einer Temperatur von 500° bis 1000° C, insbesondere zwischen 700° und 800° C, unter inerten oder reduzierenden Bedingungen calciniert wird.

## Claims

1. Process for preparing lithium metal phosphates of the formula LiMPO₄, where M is at least one divalent metal, which comprises the following steps:
a) reaction of a lithium phosphate with at least one metal salt MXₙ and an acid phosphate source in a polar solvent, where X is an anion which together with the metal M forms a salt which is soluble in the solvent and n is the quotient of the valency of the metal M and the valency of the anion X, giving a suspension of at least one M-containing phosphate in the solvent;
b) addition of a basic lithium source to the suspension of M-containing phosphate in the solvent obtained in step (a), giving a precipitation product;
c) conversion of the precipitation product obtained in (b) into a lithium metal phosphate of the formula LiMPO₄, giving a residual solution containing lithium ions;
d) addition of a basic phosphate source to the residual solution so that lithium phosphate is precipitated from the residual solution;
e) separation of the lithium phosphate from the suspension.

2. Process according to Claim 1, wherein the lithium phosphate obtained in step (e) is recirculated to step (a).

3. Process according to Claim 1 or 2, wherein M is at least one transition metal, preferably selected from the group consisting of Fe, Mn, Co and Ni, in particular Fe.

4. Process according to any of the preceding claims, wherein the lithium phosphate is lithium orthophosphate.

5. Process according to any of the preceding claims, wherein X is selected from the group consisting of chloride, nitrate and sulphate, in particular sulphate.

6. Process according to any of the preceding claims, wherein the pH of the solution in step (a) is increased from a value of less than 2 to a value in the range from 2 to 6 and in step (b) is increased to a value in the range from 6 to 8.

7. Process according to any of the preceding claims, wherein a reducing agent is added in step (a) and/or (b).

8. Process according to any of the preceding claims, wherein the polar solvent is water.

9. Process according to any of the preceding claims, wherein the acid phosphate source used in step (a) is a phosphoric acid compound, in particular orthophosphoric acid.

10. Process according to any of the preceding claims, wherein the basic lithium source used in step (b) is lithium hydroxide and/or lithium oxide.

11. Process according to any of the preceding claims, wherein the basic phosphate source used in step (d) is an alkali metal phosphate, in particular sodium phosphate.

12. Process according to any of the preceding claims, wherein the reactions in step (a) and (b) are carried out at a temperature of from 5° to 80°C, preferably from 15° to 50°C, particularly preferably at room temperature.

13. Process according to any of the preceding claims, wherein a dispersing or milling treatment of the suspension until the D₉₀ of the particles present in the suspension is less than 50 µm is carried out in steps (a), (b) and/or (c).

14. Process according to Claim 13, wherein the D₉₀ of the particles present in the suspension is less than 25 µm, preferably less than 20 µm, particularly preferably less than 15 µm.

15. Process according to Claim 13 or 14, wherein the dispersing or milling treatment is carried out in steps (a) and/or (b).

16. Process according to any of Claims 13 to 15, wherein the dispersing or milling treatment in step (a) commences before addition of the metal salt MXₙ and/or in step (b) commences before addition of the lithium hydroxide and is continued until complete conversion of the lithium phosphate compound in step (a) and/or the M-containing phosphate in step (b).

17. Process according to any of the preceding claims, wherein a carbon-containing and/or electron-conducting substance and/or a precursor compound of an electron-conducting substance is added in steps (a) and/or (b) and/or (c).

18. Process according to Claim 17, wherein the electron-conducting substance is selected from among carbon, in particular conductive carbon, and carbon fibres.

19. Process according to Claim 17, wherein the precursor compound of an electron-conducting substance is a carbon-containing compound, in particular a carbohydrate, particularly preferably lactose.

20. Process according to any of the preceding claims, wherein the components are used in an Li₃PO₄ : MXₙ : H₃PO₄ ratio of about 8 : 12 : 4.

21. Process according to any of the preceding claims, wherein the basic lithium source is added in an amount of about 12 equivalents in step (b).

22. Process according to any of the preceding claims, wherein steps (a) and/or (b) and/or (c) are carried out under an inert gas atmosphere.

23. Process according to any of Claims 13 to 22, wherein the dispersing or milling treatment of the suspension is carried out by means of a disperser (with or without pump rotor), an Ultraturrax^{®} stirrer, a mill, an intensive mixer, a centrifugal pump, an in-line mixer, a mixing nozzle or an ultrasonic instrument.

24. Process according to any of the preceding claims, wherein the suspended precipitation product from step (b) is, in step (c), separated off, if appropriate washed and dried, and then converted by calcination under inert or reducing conditions into lithium metal phosphate.

25. Process according to any of Claims 1 to 23, wherein the suspended precipitation product from step (b) is converted directly into lithium metal phosphate under hydrothermal conditions in step (c).

26. Process according to Claim 25, wherein the reaction under hydrothermal conditions in step (c) is carried out at temperatures of from 100 to 250°C, in particular from 100 to 180°C, and a pressure of from 1 bar to 40 bar, in particular from 1 bar to 10 bar, of steam pressure.

27. Process according to any of Claims 24 to 26, wherein the precipitation product which has been separated off and if appropriate washed in step (c) or lithium metal phosphate, preferably before a drying step, is mixed with a carbon-containing precursor compound, preferably a carbohydrate, particularly preferably lactose, and dried at a temperature of from 50° to 500°C and calcined at a temperature of from 500° to 1000°C, in particular from 700° to 800°C, under inert or reducing conditions.

## Revendications

1. Procédé de préparation de phosphates métalliques de lithium de la formule LiMPO₄, dans laquelle M représente au moins un métal bivalent, comprenant les étapes suivantes :
a) Réaction du phosphate de lithium avec au moins un sel métallique MXₙ et une source acide de phosphate, dans un solvant polaire, où X est un anion qui forme un sel soluble dans le solvant avec le métal M, et n est le quotient de la valence du métal M et de la valence de l'anion X, où on obtient une suspension d'au moins un phosphate contenant M dans le solvant ;
b) Addition d'une source basique de lithium à la suspension obtenue à l'étape (a) du phosphate contenant M dans le solvant, où on obtient un produit de précipitation ;
c) Réaction du produit de précipitation obtenu en (b) en un phosphate métallique de lithium de la formule LiMPO₄, où on obtient une solution résiduelle, qui contient les ions lithium ;
d) Addition d'une source basique de phosphate à la solution résiduelle, de sorte que le phosphate de lithium précipite de la solution résiduelle ;
e) Séparation du composé phosphate de lithium.

2. Procédé selon la revendication 1, où le phosphate de lithium obtenu à l'étape (e) est recyclé à l'étape (a).

3. Procédé selon la revendication 1 ou 2, où M est au moins un métal de transition, choisi de préférence parmi le groupe consistant en Fe, Mn, Co et Ni, en particulier Fe.

4. Procédé selon l'une des revendications précédentes, dans lequel le phosphate de lithium est l'orthophosphate de lithium.

5. Procédé selon l'une des revendications précédentes, où X est choisi parmi le groupe consistant en le chlorure, le nitrate et le sulfate, en particulier le sulfate.

6. Procédé selon l'une des revendications précédentes, où le pH de la solution est augmenté à l'étape (a), d'une valeur inférieure à 2 à une valeur située dans l'intervalle allant de 2 à 6 et à l'étape (b), à une valeur située dans l'intervalle allant de 6 à 8.

7. Procédé selon l'une des revendications précédentes, où dans l'étape (a) et/ou l'étape (b), on ajoute un agent de réduction.

8. Procédé selon l'une des revendications précédentes, où le solvant polaire est l'eau.

9. Procédé selon l'une des revendications précédentes, où la source acide de phosphate utilisée à l'étape (a), est un composé acide phosphorique, en particulier l'acide orthophosphorique.

10. Procédé selon l'une des revendications précédentes, où la source basique de lithium utilisée à l'étape (b), est l'hydroxyde de lithium et/ou l'oxyde de lithium.

11. Procédé selon l'une des revendications précédentes, où la source basique de phosphate utilisée à l'étape (d), est un phosphate alcalin, en particulier le phosphate de sodium.

12. Procédé selon l'une des revendications précédentes, où les réactions des étapes (a) et (b) sont réalisées à une température située dans l'intervalle allant de 5° à 80°C, de préférence de 15° à 50°C, en particulier à température ambiante.

13. Procédé selon l'une des revendications précédentes, où dans les étapes (a), (b) et/ou (c), on réalise un traitement de dispersion ou de broyage de la suspension, jusqu'à ce que la valeur D₉₀ des particules présentes dans la suspension se situe à moins de 50 µm.

14. Procédé selon la revendication 13, où la valeur D₉₀ des particules présentes dans la suspension est inférieure à 25 µm, de préférence inférieure à 20 µm, de manière particulièrement préférée inférieure à 15 µm.

15. Procédé selon la revendication 13 ou 14, où le traitement de dispersion ou de broyage est réalisé aux étapes (a) et/ou (b).

16. Procédé selon l'une des revendications 13 à 15, où le traitement de dispersion ou de broyage commence à l'étape (a) avant l'addition du sel métallique MXₙ et/ou à l'étape (b) avant l'addition de l'hydroxyde de lithium et procède jusqu'à réaction complète du composé phosphate de lithium à l'étape (a) et respectivement, du phosphate contenant M à l'étape (b).

17. Procédé selon l'une des revendications précédentes, où dans les étapes (a) et/ou (b) et/ou (c), on ajoute une substance carbonée et/ou une substance conductrice d'électrons et/ou un composé précurseur d'une substance conductrice d'électrons.

18. Procédé selon la revendication 17, où la substance conductrice d'électrons est choisie parmi le carbone, en particulier le carbone conducteur, et des fibres de carbone.

19. Procédé selon la revendication 17, où le composé précurseur d'une substance conductrice d'électrons est un composé contenant du carbone, en particulier un hydrate de carbone et de manière particulièrement préférée, le lactose.

20. Procédé selon l'une des revendications précédentes, où les composants sont mis en oeuvre en un rapport Li₃PO₄ : MXₙ : H₃PO₄ d'environ 8 : 12 : 4.

21. Procédé selon l'une des revendications précédentes, où à l'étape (b), la source basique de lithium est ajoutée en une quantité d'environ 12 équivalents.

22. Procédé selon l'une des revendications précédentes, où les étapes (a) et/ou (b) et/ou (c) sont effectuées sous atmosphère du gaz inerte.

23. Procédé selon l'une des revendications 13 à 22, où le traitement de dispersion ou de broyage de la suspension est réalisée avec un disperseur (avec ou sans rotor à pompe), un agitateur Ultraturax®, un moulin, un mélangeur intensif, une pompe centrifuge, un mélangeur en ligne, une buse de mélange ou un appareil à ultrasons.

24. Procédé selon l'une des revendications précédentes, dans lequel le produit de précipitation en suspension de l'étape (b) est séparé à l'étape (c), le cas échéant lavé et séché, puis mis à réagir en phosphate métallique de lithium par calcination dans des conditions inertes ou réductrices.

25. Procédé selon l'une des revendications 1 à 23, dans lequel le produit de précipitation en suspension de l'étape (b) est mis à réagir à l'étape (c), directement en phosphate métallique de lithium dans des conditions hydrothermiques.

26. Procédé selon la revendication 25, où à l'étape (c), la réaction dans des conditions hydrothermiques est réalisée à des températures situées dans l'intervalle allant de 100 à 250°C, en particulier de 100 à 180°C, et sous une pression allant de 1 bar à 40 bar, en particulier de 1 bar à 10 bar de pression de vapeur.

27. Procédé selon l'une des revendications 24 à 26, où le produit de précipitation séparé à l'étape (c) et le cas échéant lavé, ou le phosphate métallique de lithium, est mélangé, de préférence avant une étape de séchage, à un composé précurseur contenant du carbone, de préférence un hydrate de carbone, de manière particulièrement préférée le lactose, séché à une température allant de 50° à 500°C et calciné à une température située dans l'intervalle allant de 500°C à 1000°C, en particulier allant de 700° à 800°C, dans des conditions inertes ou réductrices.
